Europäisches Patentamt

European Patent Office

Office européen des brevets

(19)

(11) Publication number : **0 186 154 B2**

(12) # NEW EUROPEAN PATENT SPECIFICATION

(45) Date of publication of the new patent specification : **13.01.93 Bulletin 93/02**

(51) Int. Cl.⁵ : **B65D 1/28,** B32B 27/08

(21) Application number : **85116301.4**

(22) Date of filing : **20.12.85**

(54) **Multilayer parison, process for its production and multilayer container.**

(30) Priority : **26.12.84 JP 277074/84**

(43) Date of publication of application : **02.07.86 Bulletin 86/27**

(45) Publication of the grant of the patent : **26.07.89 Bulletin 89/30**

(45) Mention of the opposition decision : **13.01.93 Bulletin 93/02**

(84) Designated Contracting States : **GB IT NL SE**

(56) References cited :
**EP-B- 0 033 333**
**FR-A- 2 383 091**
**US-A- 4 052 497**
**US-A- 4 161 562**

(73) Proprietor : **MITSUBISHI GAS CHEMICAL COMPANY, INC.**
**5-2, Marunouchi 2-chome Chiyoda-Ku Tokyo, 100 (JP)**

(72) Inventor : **Shimizu, Senzo**
**735-25-2, Odaka**
**Odawara-shi Kanagawa-ken (JP)**
Inventor : **Nagano, Mitsuyasu**
**2-9-10, Fujimino**
**Hiratsuka-shi Kanagawa-ken (JP)**
Inventor : **Ishizeki, Tsutomu**
**95, Shinomiya**
**Hiratsuka-shi Kanagawa-ken (JP)**
Inventor : **Momose, Yoshiaki**
**1028-5, Kitayana**
**Hadano-shi Kanagawa-ken (JP)**

(74) Representative : **Kraus, Walter, Dr. et al**
**Patentanwälte Kraus, Weisert & Partner**
**Thomas-Wimmer-Ring 15**
**W-8000 München 22 (DE)**

EP 0 186 154 B2

## Description

Background of the invention

1. Field of the invention

This invention relates to a parison of a multilayer structure and a process for its production. More specifically, this invention relates to a multilayer parison as a preform for obtaining a multilayer container having excellent transparency, gas-barrier properties and mechanical strength, and to a process for its production.

2. Description of the prior art

In recent years, hollow containers of thermoplastic resins have gained widespread acceptance for holding cosmetics, foodstuffs, drinks, etc. because of their certain advantages such as light weight and safety against rupture. Particularly, with an advance in the biaxial stretch-blow moulding technology, there has been a rapid development of hollow containers of polyethylene terephthalate.

Biaxially oriented containers of thermoplastic polyester resins, mainly polyethylene terepthalate, however, do not possess all the requirements. When, for example, they are to hold foods and drinks requiring a high level of gas-barrier property, they have the defect of reducing the flavors of such contents because of their insufficient barrier properties against oxygen and carbon dioxide gases.

Attempts have been made to remedy this defect. For example, Japanese Laid-Open Patent Publication Nos. 128516/1982 and 128520/1982 disclose that a three-layer parison composed of outside layers of a thermoplastic polyester and an interlayer of a m-xylylene group-containing polyamide resin (to be referred to as MX nylon) as a gas-barrier interlayer is produced by using a molding machine having two injection cylinders corresponding to the thermoplastic polyester resin and the MX nylon, and continuously and successively injecting the molten thermoplastic polyester and MX nylon into a single mold by one mold opening action. This method, however, has the defect that when it is desired to reduce the thickness of the MX nylon layer, or in other words, to decrease the amount of MX nylon injected, the MX nylon layer is not formed throughout the parison.

The present inventors, in an attempt to remedy this defect, previously succeeded in decreasing the amount of injection of MX nylon from that in the above prior method by again injecting the thermoplastic polyester resin after the injection of MX nylon in the above prior method to give a parison of a five-layer structure composed of two outside layers and one central layer of the thermoplastic polyester resin and two interlayers of MX nylon between the outside layers and the central layer, and filed a patent application for this method (copending U.S. Serial No. 731,953). According to this method, the thickness of the MX nylon layers can be very much decreased and the amount of MX nylon injected can be increased from that in the prior method, although the parison contains two MX nylon layers.

Since, however, gas-barrier resins such as MX nylon, generally have poor affinity for thermoplastic polyester resins, they have insufficient adhesion to the thermoplastic polyester layers, and delamination tends to occur. The above defect, therefore cannot be completely remedied by this method.

Summary of the invention

It is an object of this invention to provide a multilayer parison from which multilayer containers having excellent gas-barrier properties can be produced, and a process for producing such a multilayer parison.

Another object of this invention is to provide a multilayer parison from which multilayer containers free from delamination can be produced, and a process for producing such a parison.

Still another object of this invention is to provide a novel multilayer parison comprising a thin layer of a thermoplastic adhesive resin between a thermoplastic resin layer and a thermoplastic gas-barrier resin layer, and a process for producing such a multilayer parison.

Yet another object of this invention is to provide a multilayer container having excellent gas-barrier properties which does not undergo delamination even when used for a long period of time.

According to this invention, there is provided a 9-layer parison whose wall portion is composed of two outside layers and one central layer of at least one thermoplastic resin (resin A) selected from the group consisting of thermoplastic polyester resins, polycarbonate, polyvinyl chloride, polystyrene and modified polystyrene, two interlayers of m-xylylene group-containing polyamide resin (resin C) each being positioned between the central layer and each outside layer, and four adhesive layers of a thermoplastic adhesive resin (resin B) each being positioned between each outside layer and each interlayer or between each interlayer and the central layer.

According to this invention there is also provided a process for producing the aforesaid multilayer parison which comprises using a molding machine having three injection cylinders corresponding to resins A, B and C respectively, and continuously and successively injecting the molten resins A, B and C into a single mold in the order of resins A, B, C, B and A by one mold opening action.

According to this invention, there is further provided a multilayer container composed of a wall portion and an open end mouth portion, said wall portion being biaxially oriented and composed of two outside layers and one central layer of at least one thermoplastic resin (resin A) selected from the group consisting of thermoplastic polyester resins, polycarbonate, polyvinyl chloride, and polystyrene and modified polystyrene, two interlayers of m-xylylene group-containing polyamide resin (resin C) each being positioned between the central layer and each outside layer, and four adhesive layers of a thermoplastic adhesive resin (resin B) each being positioned between each outside layer and each interlayer or between each interlayer and the central layer.

## Brief description of the drawings

Figure 1 is a view showing the principle of an apparatus for carrying out the process of this invention, in which reference numerals 1, 2 and 3 represent injection cylinders for injecting resins A, B and C respectively; 4, a hot runner; 5, a gate; 6 a mold; and 7, a cavity.

Figures 2 to 5 are sectional views showing the inside of the cavity in the practice of the process of this invention as the process proceeds, in which reference numerals 8, 9 and 10 represent resins A, B and C respectively; and 11, an open end mouth portion.

## Detailed description of the invention

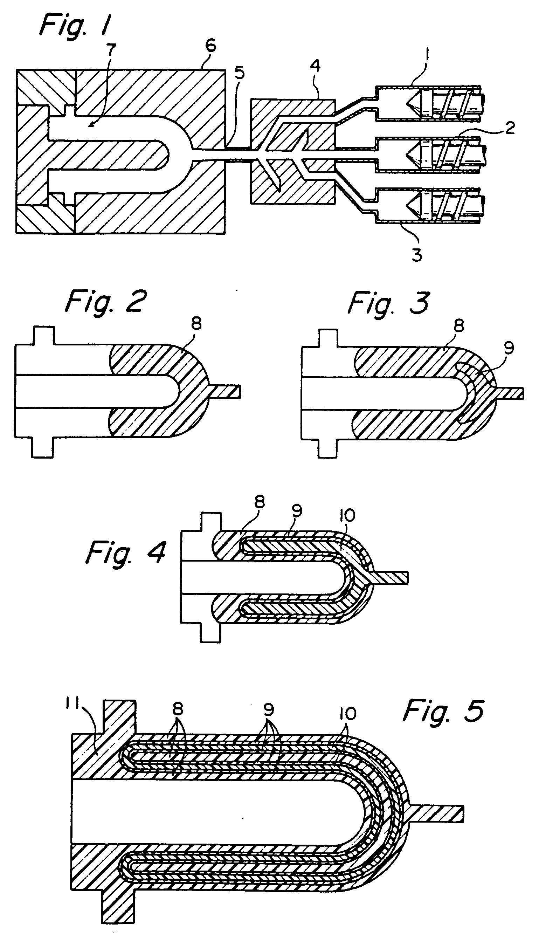

The multilayer parison and the process for its production in accordance with this invention are described below with reference to Figures 1 to 5.

Resins A, B and C molten in injection cylinders 1, 2 and 3 respectively are successively injected continuously into a cavity 7 having a configuration conforming to the desired parison within a mold 6 in the order of resins A, B, C, B and A.

When the molten resin A is injected from the injection cylinder 1 into the cavity 7, the inner sectional surface of the cavity is as shown in Figure 2.

Subsequently, the molten resin B is injected from the injection cylinder 2 into the cavity 7. The inner sectional surface of the cavity is as shown in Figure 3.

When the molten resin C is injected into the cavity 7 from the injection cylinder 3, the inside sectional surface of the cavity is as shown in Figure 4.

Thereafter, the molten resin B and the molten resin A are successively injected further into the cavity from the injection cylinders 2 and 1, respectively. Finally, 9 resin layers are formed in the cavity as shown in Figure 5.

After pressure keeping and cooling, the mold is opened. There is obtained a 9-layer parison whose wall portion is composed of two outside layers and one central layer of resin A, two interlayers of resin C each being positioned between each outside layer and the central layer, and four adhesive layers of resin B each being positioned between each outside layer and each interlayer or between each interlayer and the central layer.

The suitable amounts of the resins to be injected in order to form the 9 resin layers uniformly throughout the wall portion are 40 to 60% by volume for resin A to be injected in the first place, 20 to 40% by volume for resin A to be finally injected, 1 to 5% by volume of resin B to be first injected, 1 to 5% by volume for resin B to be later injected, and 1 to 15% by volume for resin C, all based on the capacity of the cavity of the mold.

The suitable proportions of the thicknesses of the individual resin layers in the wall portion are 20 to 30% for each outside layer of resin A, 20 to 40% for the central layer of resin A, 0.5 to 2.5% for each of the four adhesive layers of resin B, and 0.5 to 7.5% for each of the two interlayers of resin C.

Generally, the multilayer parison has a wall thickness of 2 to 6 mm, preferably 3 to 5 mm, and a multilayer container obtained by biaxial stretch-blow molding of the parison has a wall thickness of 200 to 500 micrometers, preferably 250 to 450 micrometers.

Resin A used in this invention is a thermoplastic polyester resin, polycarbonate, polyvinyl chloride, polystyrene or modified polystyrene. The thermoplastic polyester resin is preferred.

The thermoplastic polyester resin usually denotes a polyester derived from an acid component at least 80 mole%, preferably at least 90 mole%, of which consists of terephthalic acid and a glycol component at least 80 mole%, preferably at least 90 mole%, of which consists of ethylene glycol. The remainder of the acid component may comprise, for example, isophthalic acid, diphenyl ether-4,4-dicarboxylic acid, naphthalene-1,4(or 2,6)-dicarboxylic acid, adipic acid, sebacic acid, decane-1,10-dicarboxylic acid, or hexahydroterephthalic acid.

The remainder of the glycol component may comprise, for example, 1,4-butanediol, neopentyl glycol, diethylene glycol, cyclohexane dimethanol, 2,2-bis(4-hydroxyphenyl)propane, or 2,2-bis(4-hydroxyethoxyphenyl)propane. The polyester resin may further comprise a hydroxycarboxylic acid such as p-hydroxybenzoic acid as part of the acid component.

The suitable inherent viscosities of these thermoplastic polyesters are at least 0.55, preferably 0.65 to 1.4. If the inherent viscosity is less than 0.55, it is difficult to obtain the multilayer parison in a transparent amorphous state, and a container obtained from the parison has insufficient mechanical strength.

Examples of the resin B (thermoplastic adhesive resin) used in this invention include modified polyolefin resins, alpha-olefin/vinyl ester copolymers, copolyamide resins, copolyester resins, and polyurethane resins. They may be used either singly or as a mixture with each other or with another thermoplastic resin.

Resin C (thermoplastic gas-barrier resin) used in this invention is a m-xylylene group-containing polyamide resin.

MX nylon denotes polymers containing at least 70 mole% of structural units obtained from m-xylylenediamine alone or mixed xylylene diamine containing m-xylylenediamine and not more than 30%, based on the mixture, of p-xylylenediamine and an alpha, omega-aliphatic dicarboxylic acid having 6 to 10 carbon atoms. Specific examples of these polymers include homopolymers such as poly(m-xylylene adipamide), poly(m-xylylene sebacamide) and poly(m-xylylene suberamide), copolymers such as m-xylylene/p-xylylene adipamide copolymer, m-xylylene/p-xylylene pimelamide copolymer and m-xylylene/p-xylylene azelamide copolymer, and copolymers derived from the components of these homo- or copolymers and aliphatic diamines such as hexamethylenediamine, alicyclic diamines such as piperazine, aromatic diamines such as p-bis-(2-aminoethyl)benzene, aromatic dicarboxylic acids such as terephthalic acid, omega-aminocarboxylic acids such as omega-aminoheptanoic acid, lactams such as epsilon-caprolactam, or aromatic aminocarboxylic acids such as p-aminobenzoic acid.

Such polymers as nylon 6, nylon 6,6, nylon 6,10 and nylon 11 may be included in these polymers.

The suitable relative viscosity of the MX nylon is at least 1.5, preferably 2.0 to 4.0.

As required, a coloring agent, an ultraviolet absorber, an antistatic agent, an antioxidant, a lubricant, a nucleating agent, etc. may be incorporated in one or both of the resins A and B in amounts which do not impair the objects of this invention.

A multilayer container can be obtained by heating the resulting multilayer parison to the stretching temperature and biaxially stretch-blow molding the parison in a blow mold by axially moving a stretching rod to stretch the parison and simultaneously blowing a pressurized gas into the parison to expand it.

When the parison comprises a thermoplastic polyester resin as resin A and MX nylon as resin B, its stretching temperature may be substantially the same as that for a parison composed solely of the thermoplastic polyester resin, and is preferably within the range of 70 to 130°C. Generally, the suitable stretching temperature is from a temperature about 15°C above the glass transition temperature of resin A to a temperature about 15°C above 2 times the glass transition temperature. Preferably, the parison is stretched to 1 to 4 times in the axial direction and 2 to 7 times in the circumferential direction. More preferably, the stretching is carried out so that the area stretch ratio is 5 to 15 times.

The provision of the adhesive layers permits firm adhesion between the outside resin layers of resin A and the interlayers of resin C and between the central layer of resin A and the interlayers of resin C and assures freedom from delamination in long-term use in the resulting multilayer container without deteriorating its gas-barrier properties, transparency and mechanical strength.

The following example illustrates the invention more specifically.

EXAMPLE

By using polyethylene terephthalate (PET for short) having an inherent viscosity of 0.75 as resin A, modified polyethylene ("MODID E-310K", a tradename for a product of Mitsubishi Petrochemical Co., Ltd.) or modified polypropylene ("ADMER GF550", a tradename for a product of Mitsui Petrochemical Industries., Ltd.) as resin B, poly(m-xylylene adipamide) having a relative viscosity of 2.1 as resin C, a 9-layer parison having an outside diameter of 30 mm, a length of 120 mm and wall thickness of 4 mm and of which wall portion consisted of two outside layers and one central layer of resin A, two interlayers of resin C each being positioned between each outside layer and the central layer, and four adhesive layers of resin B each being positioned between each outside layer and each interlayer or between each interlayer and the central layer was produced by a 3-cylinder injection molding machine under the following injection conditions.

```
Cylinder temperature:  275°C (resin A side) and
                       265°C (resin C side)

Mold temperature:      20°C

Injection pressure keeping time:  10 seconds

Cooling time:                     15 seconds

Proportions resins injection:
        Resin A first injected: 48% by volume
        Resin B first injected:  2% by volume
        Resin C                  8% by volume
        Resin B later injected:  2% by volume
        Resin A later injected: 40% by volume


Injection speed:
        Resin A first injected: 22 ml/sec
        Resin B first injected:  8 ml/sec
        Resin C                 11 ml/sec
        Resin B later injected:  8 ml/sec
        Resin A later injected: 10 ml/sec
```

The parison was heated by a quartz heater to a surface temperature of 95°C by using a biaxial stretch-blow molding machine, transferring it into a blow mold, and biaxially stretching it and blowing it at a stretching rod moving speed of 20 cm/sec under stretch-blowing pressure of 19.6 bar (20 kg/cm$^2$). As a result, a multilayer bottle-shaped container having a total length of 275 mm, an outside diameter of 80 mm and an inner capacity of 1000 ml was obtained.

The multilayer container obtained had excellent gas-barrier properties, transparency and mechanical strength and was free from delamination.

The oxygen permeability of the container, measured by a tester (OXTRAN 100) of Modern Control Company at a temperature of 20°C and a relative humidity of 65%, was about 1/5 of that of a container composed of a single layer of polyethylene terephthalate. The delamination strength between the resin A layer and the resin C layer, measured on a rectangular sample having a width of 1 inch by pulling the layers at 180° by a "Tensilon" (Toyo Baldwin Co.), was 120 to 200 g/cm (300 to 500 g/inch) for the modified polyethylene as resin B and 80 to 160 g/cm (200 to 400 g/inch) for the modified polyproylene as resin B.

## Claims

1.  A 9-layer parison whose wall portion is composed of two outside layers and one central layer of at least one thermoplastic resin (resin A) selected from the group consisting of thermoplastic polyester resins, polycarbonate, polyvinyl chloride, polystyrene and modified polystyrene, two interlayers of m-xylylene group-containing polyamide resin (resin C) each being positioned between the central layer and each outside layer, and four adhesive layers of a thermoplastic adhesive resin (resin B) each being positioned between each outside layer and each interlayer or between each interlayer and the central layer.

2.  The parison of claim 1 wherein the proportions of the thicknesses of the resin layers in the wall portion are 20 to 30% for each of the two outside layers of resin A, 20 to 40% for the central layer of resin A, 0.5 to 2.5% for each of the four adhesive layers of resin B, and 0.5 to 7.5% for each of the two interlayers of resin C.

3.  The parison of claim 1 wherein the resin B is selected from the group consisting of modified polyolefin

5

resins, alpha-olefin/vinyl ester copolymer resins, copolyamide resins, copolyester resins and polyurethane resins.

4. The parison of claim 1 wherein the resin A is a thermoplastic polyester.

5. A process for producing a 9-layer parison whose wall portion is composed of two outside layers and one central layer of at least one thermoplastic resin (resin A) selected from the group consisting of thermoplastic poyester resins, polycarbonate, polyvinyl chloride, polystyrene and modified polystyrene, two interlayers of m-xylylene group-containing polyamide resin (resin C) each being positioned between the central layer and each outside layer, and four adhesive layers of a thermoplastic adhesive resin (resin B) each being positioned between each outside layer and each interlayer or between each interlayer and the central layer; which comprises using a molding machine having three injection cylinders corresponding to resins A, B and C respectively, and continuously and successively injecting the molten resins A, B and C into a single mold in the order of resins A, B, C, B and A by one mold opening action.

6. The process of claim 5 wherein the amounts of the resins injected are 40 to 60% by volume for resin A injected first, 20 to 40% by volume for resin A injected finally, 1 to 5% by volume for resin B injected first, 1 to 5% by volume for resin B injected later, and 1 to 15% by volume for resin C, all based on the capacity of the cavity of the mold.

7. The process of claim 5 wherein the resin B is selected from the group consisting of modified polyolefin resins, alpha-olefin/vinyl ester copolymer resins, copolyamide resins, copolyester resins, and polyurethane resins.

8. The process of claim 5 wherein the resin A is a thermoplastic polyester.

9. A multilayer container composed of a wall portion and an open end mouth portion, said wall portion being biaxially oriented and composed of two outside layers and one central layer of at least one thermoplastic resin (resin A) selected from the group consisting of thermoplastic polyester resins, polycarbonate, polyvinyl chloride, polystyrene and modified polystyrene, two interlayers of m-xylylene group-containing polyamide resin (resin C) each being positioned between the central layer and each outside layer, and four adhesive layers of a thermoplastic adhesive resin (resin B) each being positioned between each outside layer and each interlayer or between each interlayer and the central layer.

## Patentansprüche

1. 9-Schichten-Külbel, dadurch **gekennzeichnet**, daß sein Wandteil aus zwei Außenschichten und einer Mittelschicht aus mindestens einem thermoplastischen Harz (Harz A), ausgewählt aus der Gruppe bestehend aus thermoplastischen Polyesterharzen, Polycarbonat, Polyvinylchlorid, Polystyrol und modifiziertem Polystyrol, zwei Zwischenschichten aus einem m-Xylylengruppen enthaltenden Polyamidharz (Harz C), die jeweils zwischen der Mittelschicht und jeder Außenschicht angeordnet sind, und vier Klebstoffschichten eines thermoplastischen Klebstoffharzes (Harz B), die jeweils zwischen jeder Außenschicht und jeder Zwischenschicht oder zwischen jeder Zwischenschicht und der Mittelschicht angeordnet sind, besteht.

2. Külbel nach Anspruch 1, dadurch **gekennzeichnnet**, daß die Verhältnisse der Dicken der Harzschichten in dem Wandteil 20 bis 30% für jede der zwei Außenseitenschichten des Harzes A, 20 bis 40% für die Mittelschicht aus dem Harz A, 0,5 bis 2,5% für jede der vier Klebstoffschichten aus dem Harz B und 0,5 bis 7,5% für jede der zwei Zwischenschichten aus dem Harz C sind.

3. Külbel nach Anspruch 1, dadurch **gekennzeichnet**, daß das Harz B aus der Gruppe bestehend aus modifizierten Polyolefinharzen, $\alpha$-Olefin/Vinylester-Copolymerharzen, Copolyamidharzen, Copolyesterharzen und Polyurethanharzen ausgewählt ist.

4. Külbel nach Anspruch 1, dadurch **gekennzeichnet**, daß das Harz A ein thermoplastischer Polyester ist.

5. Verfahren zur Herstellung eines 9-Schichten-Külbels, bei dem der Wandteil aus zwei Außenschichten und einer Mittelschicht aus mindestens einem thermoplastischen Harz (Harz A), ausgewählt aus der Gruppe bestehend aus thermoplastischen Polyesterharzen, Polycarbonat, Polyvinylchlorid, Polystyrol und modifiziertem Polystyrol, zwei Zwischenschichten aus einem m-Xylylengruppen enthaltenden Poylamidharz (Harz C), die jeweils zwischen der Mittelschicht und jeder Außenschicht angeordnet sind, und vier Klebstoffschichten eines thermoplastischen Klebstoffharzes (Harz B), die jeweils zwischen jeder Außenschicht und jeder Zwischenschicht oder zwischen jeder Zwischenschicht und der Mittelschicht angeordnet sind, besteht, dadurch **gekennzeichnet**, daß man eine Formmaschine verwendet, die drei, den Harzen A, B bzw. C entsprechende Spritzzylinder aufweist, und daß man kontinuierlich und nacheinander die geschmolzenen Harze A, B und C in eine einzige form in der Reihenfolge der Harze, A, B, C, B und A durch eine formöffnende Aktion einspritzt.

6. Verfahren nach Anspruch 5, dadurch **gekennzeichnet**, daß die Mengen der eingespritzten Harze 40 bis 60 Vol.-% für das Harz A, das zuerst eingespritzt wird, 20 bis 40 Vol.-% für das Harz A, das am Schluß eingespritzt wird, 1 bis 5% für das Harz B, das zuerst eingespritzt wird, 1 bis 5 Vol.-% für das Harz B, das später eingespritzt wird, und 1 bis 15 Vol.-% für das Harz C betragen, wobei alle Mengen auf die Kapazität des Hohlraums der form bezogen sind.

7. Verfahren nach Anspruch 5, dadurch **gekennzeichnet**, daß das Harz B aus der Gruppe bestehend aus modifizierten Polyolefinharzen, $\alpha$-Olefin/Vinylester-Copolymerharzen, Copolyamidharzen, Copolyesterharzen und Polyurethanharzen ausgewählt ist.

8. Verfahren nach Anspruch 5, dadurch **gekennzeichnet**, daß das Harz A ein thermoplastischer Polyester ist.

9. Vielschichten-Behälter, dadurch **gekennzeichnet**, daß er aus einem Wandteil und einem offenendigen Mundteil besteht, wobei der genannte Wandteil biaxial orientiert ist,und aus zwei Außenseitenschichten und einer Mittelschicht aus mindestens einem thermoplastischen Harz (Harz A), ausgewählt aus der Gruppe bestehend aus thermoplastischen Polyesterharzen,
Polycarbonat, Polyvinylchlorid und Polystyrol und modifiziertem Polystyrol, zwei Zwischenschichten aus einem m-Xylylengruppen enthaltenden Polyamidharz (Harz C), die jeweils zwischen der Mittelschicht und jeder Außenschicht angeordnet sind, und vier Klebstoffschichten aus einem thermoplastischen Klebstoffharz (Harz B), die jeweils zwischen jeder Außenschicht und jeder Zwischenschicht oder zwischen jeder Zwischenschicht und der Mittelschicht angeordnet sind, besteht.

## Revendications

1. Une ébauche (paraison) à 9 couches dont la paroi est formée de deux couches externes et d'une couche centrale en une ou plusieurs résines thermoplastiques (résine A) choisies parmi des résines thermoplastiques de polyesters, polycarbonates, polychlorure de vinyle et polystyrène ou polystyrène modifié, de deux couches intermédiaires d'une résine de polyamide à groupes m-xylylène (résine C) qui sont placées chacune entre la couche centrale et chaque couche externe, et quatre couches adhésives d'une résine thermoplastique adhésive (résine B) placées chacune entre chaque couche externe et chaque couche intermédiaire ou bien entre chaque couche intermédiaire et la couche centrale.

2. L'ébauche de la revendication 1 dans laquelle les proportions des épaisseurs des couches de résines de la paroi sont de 20 à 30 % pour chacune des deux couches externes de la résine A, de 20 à 40 % pour la couche centrale de résine A, de 0,5 à 2,5 % pour chacune des quatre couches adhésives de la résine B, et de 0,5 à 7,5 % pour chacune des deux couches intermédiaires de la résine C.

3. L'ébauche de la revendication 1 dans laquelle la résine B est choisie parmi des résines de polyoléfines modifiées, des résines de copolymères d'une alpha-oléfine et d'un ester vinylique,des résines de copolyamides, des résines de copolyesters et des résines de polyuréthanes.

4. L'ébauche de la revendication 1 dans laquelle la résine A est un polyester thermoplastique.

5. Un procédé de fabrication d'une ébauche (paraison) à 9 couches dont la paroi est formée de deux couches externes et d'une couche centrale en une ou plusieurs résines thermoplastiques (résine A) choisies parmi des résines thermoplastiques de polyesters, polycarbonates, polychlorure de vinyle et polystyrène ou polystyrène modifié, de deux couches intermédiaires d'une résine de polyamide à groupes m-xylylène (résine C) qui sont placées chacune entre la couche centrale et chaque couche externe, et quatre couches adhésives d'une résine thermoplastique adhésive (résine B) placées chacune entre chaque couche externe et chaque couche intermédiaire ou bien entre chaque couche intermédiaire et la couche centrale, procédé dans lequel on utilise une machine de moulage à trois cylindres d'injection pour les résines respectives A, B et C, et on injecte d'une manière continue et successivement dans un seul moule les résines fondues A, B et C dans l'ordre de résines A, B, C, B et A, par une action d'ouverture du moule.

6. Procédé de la revendication 5, dans lequel les proportions en volumes des résines injectées sont de 40 à 60 % pour la résine A injectée en premier lieu, de 20 à 40 % pour la résine A injectée en dernier, de 1 à 5 % pour la résine B injectée en premier et de 1 à 5 % également pour cette résine B injectée en dernier, et de 1 à 15 % pour la résine C, toutes proportions qui sont rapportées à la capacité de la cavité du moule.

7. Le procédé de la revendication 5, dans lequel la résine B est choisie parmi une résine de polyoléfine modifiée, une résine d'un copolymère d'une alpha-oléfine et d'un ester vinylique et une résine d'un copolyamide, d'un copolyester ou d'un polyuréthane.

8. Le procédé de la revendication 5 dans lequel la résine A est un polyester thermoplastique.

9. Un récipient ou réservoir à plusieurs couches constitué d'une paroi et d'un goulot ouvert, dont la paroi est orientée suivant deux axes et formée de deux couches externes et d'une couche centrale en une ou plusieurs résines thermoplastiques (résine A) choisies parmi des résines thermoplastiques de polyesters, polycarbonates, polychlorure de vinyle et polystyrène ou polystyrène modifié, de deux couches intermédiaires d'une résine de polyamide à groupes m-xylylène (résine C) qui sont placées chacune entre la couche centrale et l'une des couches externes, et de quatre couches adhésives d'une résine thermoplastique adhésive (résine B) placées chacune entre chaque couche externe et chaque couche intermédiaire ou bien entre chaque couche intermédiaire et la couche centrale

*Fig. 1*

*Fig. 2*

*Fig. 3*

*Fig. 4*

*Fig. 5*